Europäisches Patentamt

European Patent Office

Office européen des brevets

(11) Veröffentlichungsnummer: **0 177 621**
**B1**

## (12) EUROPÄISCHE PATENTSCHRIFT

(45) Veröffentlichungstag der Patentschrift:
24.08.88

(21) Anmeldenummer: 84112015.7

(22) Anmeldetag: 06.10.84

(51) Int. Cl.⁴: **B 29 C 67/22,** B 32 B 5/32

(54) Verfahren und Vorrichtung zur Herstellung eines Formkörpers insbesondere einer Platte, nach dem Verfahren hergestellter Formkörper und Verwendung desselben.

(43) Veröffentlichungstag der Anmeldung:
16.04.86 Patentblatt 86/16

(45) Bekanntmachung des Hinweises auf die Patenterteilung:
24.08.88 Patentblatt 88/34

(84) Benannte Vertragsstaaten:
AT BE CH DE FR GB IT LI LU NL SE

(56) Entgegenhaltungen:
DD - A - 113 475
DE - A - 2 118 503
DE - U - 8 235 721
GB - A - 2 002 673
GB - A - 2 121 350
US - A - 3 027 040
US - A - 3 918 863

PATENTS ABSTRACTS OF JAPAN, Band 5, Nr. 6
(M-50)(678), 16. Januar 1981; & JP - A - 55 139 230
(SEKISUI KASEIHIN KOGYO K.K.) 30.10.1980
idem

(73) Patentinhaber: **Kork AG Boswil, Industriestrasse 559, CH-5623 Boswil (CH)**

(72) Erfinder: **Spirig, Josef, Brancadella, CH-6516 Cugnasco (CH)**

(74) Vertreter: **Schmauder, Klaus Dieter et al, c/o Schmauder & Wann Patentanwaltsbüro Nidelbadstrasse 75, CH-8038 Zürich (CH)**

# Beschreibung

Die Erfindung betrifft ein Verfahren zur Herstellung eines Formkörpers insbesondere einer Platte gemäss Oberbegriff des Anspruches 1; ferner eine Vorrichtung gemäss Oberbegriff des Anspruches 4 sowie ein nach dem Verfahren hergestellter Formkörper und eine Verwendung desselben.

Ein Verfahren und eine Vorrichtung zur Herstellung eines Formkörpers aus mindestens zwei verschiedenen Polystyrolschaumstoffen sind beispielsweise aus der JP-A-55 139 230 bekannt. Bei diesem Verfahren und der Vorrichtung sind eine unterschiedliche Behandlung der einzelnen Polystyrolschaumstoffe, insbesondere ein Elastifizieren einer Polystyrolschaumstoffschicht nicht vorgesehen. Überdies hat die bekannte Vorrichtung den Nachteil, dass durch die an der Schmalseite des Formkastens erfolgende Einbringung des Polystyrolschaumstoffes die Füllung über die Länge und Breite der Schicht schlecht ist. Die minimale Schichtdicke ist auf die Querschnittsabmessung der Füllpistole in Dickenrichtung beschränkt. Für jede Schicht muss eine eigene Füllpistole vorhanden sein oder sie muss von Schicht zu Schicht umgesetzt werden.

Aufgabe der Erfindung ist es, ein Verfahren und eine Vorrichtung der eingangs genannten Art zu verbessern, so dass insbesondere eine unterschiedliche Behandlung, vorzugsweise ein Elastifizieren eines einzelnen Polystyrolschaumstoffmaterials möglich ist.

Die gestellte Aufgabe wird erfindungsgemäss gelöst durch:
– ein Verfahren gemäss Anspruch 1;
– eine Vorrichtung gemäss Anspruch 4.

Die mechanische Nachbehandlung des geschäumten Polystyrolmaterials kleiner Dichte nach dem Schäumen durch Expandieren während des Entspannens und Kühlens und anschliessendes Komprimieren ermöglicht die Herstellung eines Formkörpers, dessen Polystyrolschaumstoff kleiner Dichte in überraschender Weise besonders elastisch ist. Dennoch verleiht die Schicht aus dem Polystyrolschaumstoff grössere Dichte dem Formkörper eine gute Formbeständigkeit und Stabilität.

Besonders gute Elastizitätseigenschaften erhält man, wenn man gemäss den Ansprüchen 2 und/ oder 3 verfährt.

Der Anspruch 4 beschreibt eine vorteilhafte Vorrichtung zur Durchführung des Verfahrens.

Der so hergestellte Formkörper kann in der einen oder anderen Polystyrolschaumstoffschicht gegebenenfalls eine Armierung, beispielsweise aus Faserstoffen, insbesondere Glasfasern, enthalten. Auch ist es möglich, den Formkörper nicht nur zweischichtig, sondern drei- und mehrschichtig auszubilden. Die einzelnen Schichten können dann jeweils nacheinander stufenweise hergestellt werden. Durch die verstellbare Formwand können Formkörper auch in verschiedenen Dicken hergestellt werden, ohne die Form oder Formteile auswechseln zu müssen.

Der neue Formkörper ist für die verschiedensten Verwendungszwecke geeignet, so beispielsweise als Formteil zum Verpacken von empfindlichen Gegenständen wie Elektrogeräten, Glas, Porzellan, Nahrungsmittel; weiter als Formteile für Rettungsringe, Schwimmwesten, Rettungsboote und dergleichen im maritimen Bereich; ferner als wärmeisolierende Bauteile in der Kühltechnik und im Bauwesen.

Eine besonders bevorzugte Verwendung solcher Formkörper ist die als Trittschalldämmplatte im Bauwesen, wobei eine Ausbildung nach Anspruch 5 besonders vorteilhaft ist. Dabei kann die erste, weichere Schicht an der Befestigungsseite der Trittschalldämmplatte eine gute Schallisolation gewährleisten, während die härtere zweite Schicht der Trittschalldämmplatte eine solche Festigkeit verleihen kann, so dass vielfach auf der Baustelle auf eine zusätzliche schützende Abdeckung einer solchen Trittschalldämmplatte verzichtet werden kann. Dadurch ergibt sich eine wesentliche Vereinfachung im Bauwesen. Besonders günstige Festigkeits- und Isolationswerte erbringt eine Ausbildung nach Anspruch 6. Die schallisolierenden Eigenschaften lassen sich durch eine Ausgestaltung nach Anspruch 7 verbessern. Ganz bevorzugt ist die Verwendung nach Anspruch 8. Trotz guter Wärmeisolationseigenschaften weist eine solche Trittschalldämmplatte dennoch ausreichende Festigkeitseigenschaften auf, um rasterartig angeordnete Ausnehmungen zu schaffen, in denen Leitungen von Flächenklimatisiervorrichtungen, wie Fussbodenheizungen, ohne zusätzliche Hilfsmittel angeordnet werden können.

Ausführungsbeispiele des Gegenstandes der Erfindung werden nachfolgend anhand der Zeichnungen näher beschrieben, dabei zeigen:

Figur 1 eine Trittschalldämmplatte im Ausschnitt und im Querschnitt;

Figur 2 eine weitere Trittschalldämmplatte mit rasterartigen Ausnehmungen für Leitungen im Ausschnitt und im Querschnitt;

Figur 3 eine mehrschichtige Platte mit einer harten Zwischenschicht zur Erstellung einer Trittschalldämmplatte, im Ausschnitt und im Querschnitt;

Figur 4 eine weitere mehrschichtige Platte mit einer weichen Zwischenschicht zur Herstellung einer Trittschalldämmplatte, im Ausschnitt und im Querschnitt.

Figur 5 eine Kantenschutzwinkel in schaubildlicher Darstellung; und

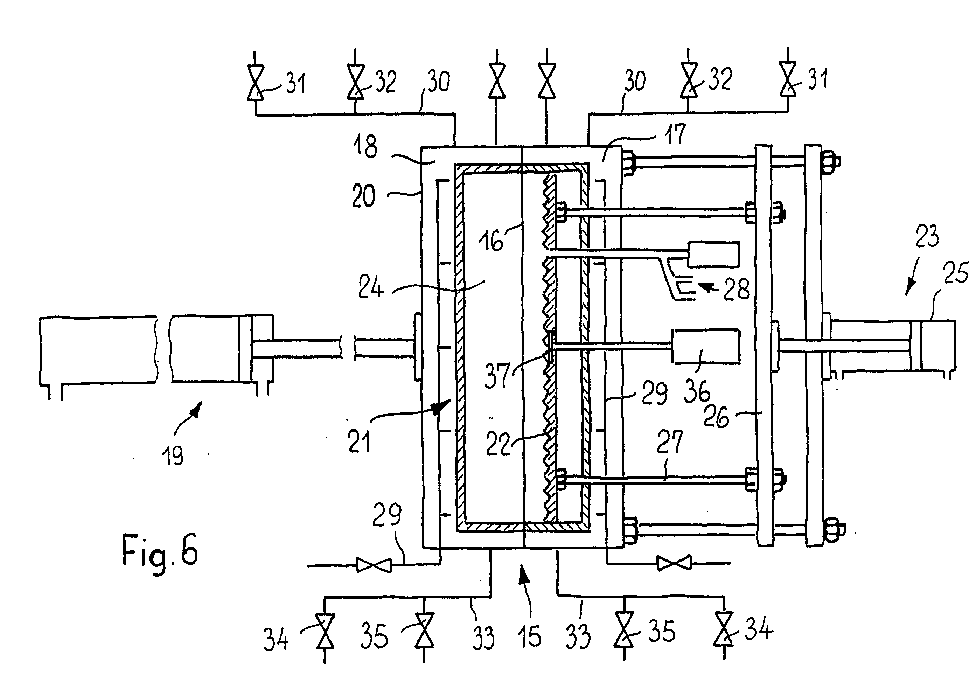

Figur 6 eine Vorrichtung zur Herstellung einer Trittschalldämmplatte, in schematischer Darstellung.

In den nachfolgenden Ausführungsbeispielen wird der mehrschichtige Formkörper anhand einer Trittschalldämmplatte näher erläutert.

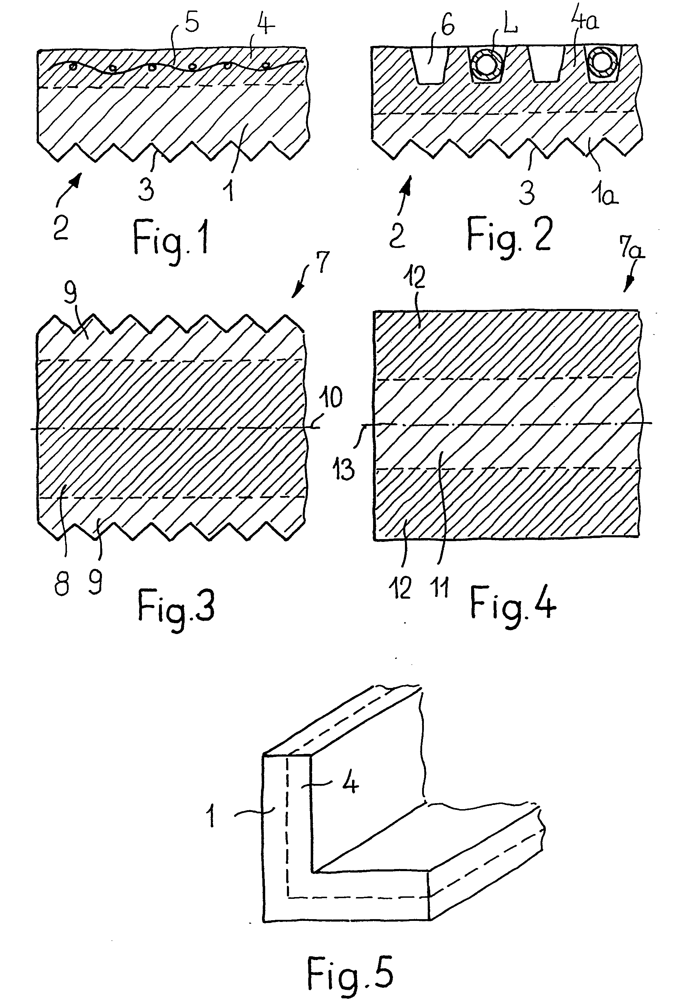

Die Figur 1 zeigt eine erste Trittschalldämmplatte mit einer ersten Schicht aus geschäumtem Polystyrol, welches Trittschalldämmeigenschaften aufweist und eine Dichte von $<15$ kg/m³ aufweist. Diese erste Schicht 1 ist auf ihrer Befestigungsseite 2 mit Rippen 3 versehen, die die Auflagefläche der Trittschalldämmplatte verringert und dadurch die schalldämmenden Eigenschaften verbessert. Mit dieser ersten Schicht 1 ist monolithisch eine zweite Schicht 4 verbunden, die eine Dichte von > 15 kg/m³ vorzugsweise von 20 bis 40 kg/m³ aufweist. Da die zweite Schicht 4 relativ dünn ist, enthält sie vorzugsweise eine Armierung 5 in Form eines Gewebes, das aus Metall und/oder Faserstoff bestehen kann.

Die Figur 2 zeigt eine weitere Trittschalldämmplatte, welche wiederum eine erste Schicht 1a mit einer Dichte <15 kg/m³ aufweist. Diese Schicht ist wiederum an der Befestigungsseite 2 mit Rippen 3 versehen. Mit dieser ersten Schicht 1a ist eine zweite Schicht 4a monolithisch verbunden, die ungefähr doppelt so dick ist wie die erste Schicht. In der zweiten Schicht 4a sind rasterartig angeordnete Ausnehmungen 6 enthalten, die der Befestigungsseite 2 der Trittschalldämmplatte gegenüberliegen und nach aussen offen sind. Diese zweite Schicht kann wieder eine Dichte von >15kg/m³, vorzugsweise von 20 bis 40 kg/m³ aufweisen. Die rasterartig angeordneten Ausnehmungen 6 ermöglichen einerseits eine Materialeinsparung und gewährleisten andererseits eine ausreichende Festigkeit und Isolationseigenschaft. Eine solche Trittschalldämmplatte ist vorzüglich als Rasterplatte zum Verlegen von Leitungen L, insbesondere für eine Flächenklimatisiervorrichtung, wie eine Fussbodenheizung geeignet.

Die Figuren 3 und 4 zeigen jeweils mehrschichtige Platten 7, 7a. Die mehrschichtige Platte 7 der Figur 3 weist eine mittlere, harte Schicht 8 auf, an der beidseits weiche Schichten 9 monolithisch angeformt sind. Durch Trennen der mehrschichtigen Platte längs der Mittelebene 10 der mittleren Schicht 8 kann diese mehrschichtige Platte in zwei zweischichtige Trittschalldämmplatten unterteilt werden.

Gleiches ist mit der mehrschichtigen Platte 7a der Figur 4 möglich, bei der die mittlere Schicht 11 weich ist und beidseitig von harten Schichten 12 abgedeckt ist. Auch hier kann durch Teilung der mittleren Schicht 11 längs der Mittelebene 13 aus der mehrschichtigen Platte 7a zwei zweischichtige Trittschalldämmplatten hergestellt werden.

Die Figur 5 zeigt einen als Kantenschutzwinkel ausgebildeten Formkörper mit einer ersten, weichen Schicht 1 und einer zweiten, harten Schicht 4.

Die Figur 5 zeigt eine Vorrichtung zur Herstellung eines Formkörpers, insbesondere einer Platte aus Polystyrol. Diese Vorrichtung weist eine zweiteilige Form 15 auf, die längs einer vertikalen Ebene 16 in einen feststehenden Formteil 17 und einen zurückziehbaren Formteil 18 unterteilt ist. Letzterer wird mittels eines Kolben/Zylinder-Aggregates 19 zum Schliessen bzw. Öffnen der Form gegen den feststehenden Formteil 17 zugestellt bzw. zurückgezogen. Die Form 15 enthält einen in einem Formgehäuse 20 angeordneten Formkasten 21, der ebenfalls längs der vertikalen Ebene 16 geteilt ist. Eine Formwand 22 des Formkastens 21 ist mit einer Stellvorrichtung 23 verbunden, so dass die Formwand 22 zur Vergrösserung bzw. Verkleinerung des Formraumes 24 hin- und herbewegt werden kann. Die Stellvorrichtung 23 weist wiederum ein Kolben/Zylinder-Aggregat 25 auf, das sich über eine Tragvorrichtung am Formgehäuse 20 abstützt und mit einem Jochbalken 26 verbunden ist, der über Verbindungsstäbe 27 mit der Formwand 22 verbunden ist. Die Stellvorrichtung 23 dient auch zum Komprimieren einer geschäumten Schicht des Formkörpers.

Die feststehende Hälfte des Formkastens 21 ist mit einer Zufuhrvorrichtung 28 für die Zufuhr der zu schäumenden Polystyrolausgangsmaterialien versehen. Weiter enthält die Form 15 die üblichen Einrichtungen wie Zuleitungen 29 zum Besprühen mit Wasser, Zuleitungen 30 mit Anschlüssen 31 für Dampf und Anschlüssen 32 für Luft, sowie Ableitungen 33 mit Anschlüssen 34 für das Abwasser und Anschlüssen 35 zum Anlegen eines Unterdruckes. Schliesslich ist die Form 15 noch mit einer Auswerfvorrichtung 36 mit Stössel 37 versehen, um bei geöffneter Form den fertigen Formkörper, d.h. die Platte auszuwerfen.

Die Herstellung einer Platte gemäss Figur 1 (ohne Armierung) oder Figur 2 erfolgt beispielsweise wie folgt:

In einer ersten Stufe wird die Form 15 geschlossen, die Formwand 22 auf die Einfüllbreite der ersten Schicht vorgeschoben und über den Anschluss 32 mittels Luft ausgeblasen. Dann wird der Formkasten 21 mit handelsüblichem Polystyrolausgangsmaterial gefüllt, welches eine Dichte von 20 bis 40 kg/m³ ergibt. Über den Anschluss 34 wird Kondensatwasser abgezogen und daraufhin die Form über den Anschluss 31 solange bedampft, bis das zugeführte Polystyrolausgangsmaterial schäumt, aber noch nicht dicht verschweisst ist.

Nach einer Entspannungsphase wird der Formling gekühlt, indem er mit Wasser über die Zuleitungen 29 besprüht wird, um die erste Schicht zu stabilisieren. Über den Anschluss 35 wird Unterdruck an die Form 15 angelegt, um Spannungen in der ersten Schicht des Formlings zu entfernen.

Nach dieser ersten Stufe wird die Formwand 22 mittels der Stellvorrichtung 23 um den Betrag zurückgezogen, welcher der Einfüllbreite der zweiten Schicht entspricht. Dieser freie Formabschnitt wird nun wiederum mit einem Polystyrolausgangsmaterial gefüllt, welches nach dem Aufschäumen eine Dichte von <15 kg/m³ liefert.

Über die Anschlüsse 34 wird wiederum Abwasser abgezogen und anschliessend wird die Form 15 über die Anschlüsse 31 bedampft. Dabei wird der ganze Formkörper, d.h. beide Schichten zu einem Formkörper fertiggeschäumt. Während des Schäumens polymerisieren die beiden Schichten an ihrer Nahtstelle zu einer monolithischen Platte zusammen. Durch erneutes Zurücknehmen der Formwand 22 um annähernd ein Drittel der Einfüllbreite der zweiten Schicht lässt man nur den geblähten Polystyrolschaumstoff mit geringer Dichte während einer Entspannungsphase expandieren. Dabei wird wiederum über die Zuleitungen 29 mit Wasser gekühlt und über die Anschlüsse 35 Unterdruck angelegt. Schliesslich wird der expandierte Polystyrolschaumstoff der zweiten Schicht zur Elastifizierung nochmals gepresst und dabei auf annähernd die Hälfte seiner Einfüllbreite komprimiert. Anschliessend wird die Form 15 mittels des Kolben/Zylinder-Aggregates 19 geöffnet und der fertige Formkörper, d. h. die Platte mittels der Auswerfvorrichtung 36 und des Stössels 37 ausgeworfen.

Nach diesem Verfahren lässt sich beispielsweise eine Platte von 1 m² Grösse, wobei beide Schichten ungefähr gleich dick sind, in ca. 2 Minuten gebrauchsfertig herstellen.

In analoger Weise lassen sich auch drei- und mehrschichtige Platten herstellen, wobei die Bedampfung in den einzelnen Stufen jeweils so einzustellen ist, dass keine vollständige Aushärtung bzw. Polymerisierung stattfindet, sondern die vollständige Polymerisierung erst nach Einbringen der letzten Schicht erfolgt. Zur Erzielung besonders elastischer Schichten aus Polystyrolschaumstoff sind die weicheren Schichten jeweils nach dem Schäumen zu expandieren und abschliessend zu komprimieren.

Wie bereits erwähnt, können solcherart hergestellte dreischichtige Platten durch Teilen längs einer Mittelebene der Zwischenschicht in zwei zweischichtige Platten unterteilt werden. Ein solcher Trennvorgang kann beispielsweise mittels Bandmesser, elektrisch erhitzten Drähten oder oszillierenden kalten Schneiddrähten erfolgen.

Gegebenenfalls können solche Platten auch mit Armierungen versehen sein. Falls ein Armierungsgeflecht verwendet wird, ist dieses vor dem Einbringen des Polystyrolausgangsmaterials in der Form anzuordnen. Es ist dabei auch denkbar, das Polystyrolausgangsmaterial beispielsweise durch Glasfasern zu armieren, die bereits mit dem Rohmaterial in beigemischtem Zustand in die Form eingebracht werden können.

Bezugszeichenaufstellung

L   Leitung
1   erste Schicht (weich)
1a  erste Schicht (weich)
2   Befestigungsseite
3   Rippen
4   zweite Schicht (hart)
4a  zweite Schicht (hart)
5   Armierung
6   Ausnehmung
7   mehrschichtige Platte
7a  mehrschichtige Platte
8   mittlere Schicht (hart)
9   äussere Schicht (weich)
10  Mittelebene von 8
11  mittlere Schicht (weich)
12  äussere Schicht (hart)
13  Mittelebene von 11
15  Form
16  vertikale Ebene
17  feststehender Formteil
18  zurückziehbarer Formteil
19  Kolben/Zylinder-Aggregat

20  Formgehäuse
21  Formkasten
22  Formwand
23  Stellvorrichtung
24  Formraum
25  Kolben/Zylinder-Aggregat
26  Jochbalken
27  Verbindungsstäbe
28  Zufuhrvorrichtung
29  Zuleitung zum Besprühen
30  Zuleitung
31  Anschluss für Dampf
32  Anschluss für Luft
33  Ableitung
34  Anschluss für Abwasser
35  Anschluss für Unterdruck
36  Auswerfvorrichtung
37  Stössel

**Patentansprüche**

1. Verfahren zur Herstellung eines Formkörpers, insbesondere einer Platte aus mindestens zwei Polystyrolschaumstoffen verschiedener Dichte, wobei verschiedene Polystyrolausgangsmaterialien nacheinander in durch eine verstellbare Formwand gebildete Formabschnitte eines Formkastens eingebracht, durch Bedampfen geschäumt und teilweise ausgehärtet werden und wobei nach dem Einbringen des letzten Polystyrolausgangsmaterials der Formkörper vollständig ausgehärtet und die Abschnitte miteinander verbunden werden, dadurch gekennzeichnet, dass man jeweils das geschäumte Polystyrolmaterial kleiner Dichte nach dem Schäumen durch Zurücknahme der verstellbaren Formwand beim Entspannen und Kühlen um einen Bruchteil der Einfüllbreite des Formabschnittes expandieren lässt und abschliessend mittels der Formwand auf einen Bruchteil der Einfüllbreite komprimiert.

2. Verfahren nach Anspruch 1, dadurch gekennzeichnet, dass man das geschäumte Polystyrolmaterial kleiner Dichte um annähernd ein Drittel der Einfüllbreite expandieren lässt.

3. Verfahren nach Anspruch 1, dadurch gekennzeichnet, dass man das geschäumte Polystyrolmaterial kleiner Dichte annähernd auf die Hälfte der Einfüllbreite komprimiert.

4. Vorrichtung zur Durchführung des Verfahrens nach Anspruch 1, mit einem Formkasten, einer Zufuhrvorrichtung für unterschiedliche Polystyrolausgangsmaterialien und einer Bedampfungsvorrichtung, wobei mindestens eine Formwand des Formkastens mittels einer Stellvorrichtung im Zuge des Herstellungsverfahrens in verschiedene Abstände zur gegenüberliegenden Formwand einstellbar ist, dadurch gekennzeichnet, das die Stellvorrichtung als Pressvorrichtung zum Komprimieren mindestens eines geschäumten Polystyrolmaterials ausgebildet ist.

5. Formkörper, hergestellt nach dem Verfahren gemäss Anspruch 1, dadurch gekenzeichnet, dass eine Schicht (1, 1a) eine Dichte von < 15 kg/m³ und eine zweite Schicht (4, 4a) eine Dichte von > 15 kg/m³ aufweist.

6. Formkörper nach Anspruch 6, dadurch gekennzeichnet, dass die Dicke einer ersten Schicht (1a) kleiner ist als jene einer zweiten Schicht (4a) und vorzugsweise die Hälfte der Dicke der zweiten Schicht (4a) beträgt.

7. Verwendung des Formkörpers nach Anspruch 6 als Trittschalldämmplatte, wobei sie auf der Befestigungsseite (2) mit Rippen (3) versehen ist.

8. Verwendung nach Anspruch 7, dadurch gekennzeichnet, dass die Trittschalldämmplatte in der zweiten Schicht (4a) rasterartig angeordnete Ausnehmungen (6) zur Aufnahme von Leitungen insbesondere einer Flächenklimatisiervorrichtung aufweist.

**Claims**

1. A method for the production of a moulded body, especially a plate consisting of at least two polystyrene foam materials of different density, in which respect various polystyrene starting materials are introduced successively into mould portions, formed by an adjustable mould wall, of a moulding box, are foamed by vapour blasting and partially hardened and in which respect, after the introduction of the last polystyrene starting material, the moulded body is completely hardened and the portions are connected together, characterised in that in each case the foamed polystyrene material of small density after the foaming is allowed to expand by retraction of the adjustable mould wall upon the relaxing and cooling by a fraction of the filling width of the mould portion and is in conclusion compressed by means of the mould wall to a fraction of the filling width.

2. A method according to claim 1, characterised in that the foamed polystyrene material of small density is allowed to expand by approximately one-third of the filling width.

3. A method according to claim 1, characterised in that the foamed polystyrene material of small density is compressed to approximately half the filling width.

4. Apparatus for carrying out the method according to claim 1, having a moulding box, a supply device for different polystyrene starting materials and a vapour blasting device, in which respect at least one mould wall of the moulding box is adjustable by means of an adjusting device in the course of the production process into different spacing with respect to the opposite mould wall, characterised in that the adjusting device is designed as a pressing device for compressing at least one foamed polystyrene material.

5. A moulded body, produced in accordance with the method according to claim 1, characterised in that one layer (1, 1a) has a density of 15 kg/m$^3$ and a second layer (4, 4a) has a density of 15 kg/m$^3$.

6. A moulded body according to claim 5, characterised in that the thickness of a first layer (1a) is less than that of a second layer (4a) and preferably amounts to half the thickness of the second layer (4a).

7. Application of the moulded body according to claim 6 as a footfall sound deadening plate, in which respect it is provided with ribs (3) on the fastening side (2).

8. Use according to claim 7, characterised in that the footfall sound deadening plate has recesses (6) in the second layer (4a), arranged in a raster-like manner, for the reception of pipelines more especially of a surface air-conditioning device.

**Revendications**

1. Procédé de production d'une pièce moulée, notamment d'une plaque, à partir d'au moins deux mousses de polystyrène de densités différentes, dans lequel différents matériaux de départ à base de polystyrène sont successivement déversés dans des zones de moulage d'un caisson de moulage, formées par une paroi de moule réglable, sont soumis à moussage par vaporisation et sont partiellement durcis, et dans lequel, après le déversement du dernier matériau de départ à base de polystyrène, la pièce moulée est intégralement durcie et les zones sont reliées mutuellement entre elles, caractérisé par le fait que, après le moussage, l'on permet au matériau à base de polystyrène, transformé en mousse et présentant respectivement une faible densité, d'accuser une expansion d'une fraction de la largeur, lors du déversement, de la zone de moulage, par retrait de la paroi de moule réglable, lors de la détente et du refroidissement, ce matériau étant, pour finir, comprimé à une fraction de la largeur de déversement, au moyen de la paroi de moule.

2. Procédé selon la revendication 1, caractérisé par le fait qu'on autorise l'expansion du matériau à base de polystyrène de faible densité, transformé en mousse, d'approximativement un tiers de la largeur de déversement.

3. Procédé selon la revendication 1, caractérisé par le fait que le matériau à base de polystyrène de faible densité, transformé en mousse, est approximativement comprimé jusqu'à la moitié de la largeur de déversement.

4. Dispositif pour la mise en œuvre du procédé selon la revendication 1, comprenant un caisson de moulage, un mécanisme de délivrance de différents matériaux de départ à base de polystyrène ainsi qu'un appareil de vaporisation, au moins une paroi de moule du caisson de moulage étant réglable au moyen d'un mécanisme de réglage, au cours du procédé de production, à des distances différentes par rapport à la paroi de moule opposée, caractérisé par le fait que le mécanisme de réglage est réalisé sous la forme d'un dispositif de compression, en vue de comprimer au moins un matériau à base de polystyrène transformé en mousse.

5. Pièce moulée fabriquée d'après le procédé selon la revendication 1, caractérisée par le fait qu'une couche (1, 1a) possède une densité inférieure à 15 kg/m$^3$ et une seconde couche (4, 4a) possède une densité supérieure à 15 kg/m$^3$.

6. Pièce moulée selon la revendication 5, caractérisée par le fait que l'épaisseur d'une première couche (1a) est inférieure à celle d'une seconde couche (4a) et représente, de préférence, la moitié de l'épaisseur de cette seconde couche (4a).

7. Application de la pièce moulée selon la revendication 6, en tant que plaque d'atténuation de bruits d'impacts, dans laquelle sont prévues des nervures (3) sur le côté fixation (2).

8. Application selon la revendication 7, caractérisée par le fait que la plaque d'atténuation de bruits d'impacts présente, dans la seconde couche (4a), des évidements (6) disposés à la manière d'un quadrillage en vue de recevoir des conduits, en particulier d'un dispositif de climatisation superficielle.

0177621

Fig.1

Fig.2

Fig.3

Fig.4

Fig.5

7

Fig.6